(19) Europäisches Patentamt / European Patent Office / Office européen des brevets

(11) **EP 2 998 014 A1**

(12) **EUROPEAN PATENT APPLICATION**

(43) Date of publication:
23.03.2016 Bulletin 2016/12

(51) Int Cl.:
*B01D 63/02* (2006.01)   *B01D 69/02* (2006.01)
*B01D 69/08* (2006.01)   *C02F 1/44* (2006.01)

(21) Application number: 14185809.2

(22) Date of filing: 22.09.2014

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: **Fresenius Medical Care Deutschland GmbH**
**61352 Bad Homburg (DE)**

(72) Inventors:
• **Albrecht, Alla**
**61267 Neu-Anspach (DE)**

• **Basagni, Massimo**
**20020 Arese (IT)**
• **Evans, David**
**Stoke-on-Trent**
**Staffs ST10 4BS (GB)**
• **Gaulle, Eric**
**20020 Arese (IT)**
• **Keller, Torsten**
**66606 St.Wendel (DE)**

(74) Representative: **Palladino, Saverio Massimo et al**
**Notarbartolo & Gervasi S.p.A.**
**Corso di Porta Vittoria, 9**
**20122 Milano (IT)**

(54) **Point-of-use water purifier with polysulfone hollow fibres**

(57)   It is described a point-of-use (POU) water purifier (10), comprising a housing (11) the inner space of which is divided by a bundle (16) of hollow fibers into an inlet compartment (14) in fluid communication with an opening (12) for connection of the purifier to the waterworks, and an outlet compartment (15) in fluid communication with the outlet (13) of purified water; the hollow fibers have an inner diameter between 150 and 250 $\mu$m and a wall thickness between 30 and 50 $\mu$m, and have pores of different size and shape on the inner and outer surface of the fiber.

*Fig. 5*

**Description**

**FIELD OF THE INVENTION**

The present invention relates generally to the field of water purification; in particular, the invention is about a point-of-use purifier for removal of biological contaminants from drinking water and from water intended for sanitary uses.

**DISCUSSION OF RELATED ART**

Availability of purified water, in particular pathogens-free water, is continuously growing on a global scale.

A first, extremely important use for biologically pure water is as drinking water. The presence of, e.g., bacteria, viruses, or endotoxins in drinking water is the cause of a wide range of diseases. The need of purifying water from biological species is particularly stringent in areas, where water distribution networks are poor, where the risk of contamination is high, or where users may be at a higher risk. Biologically pure water is also needed in the medical sector. Recent studies have demonstrated that in many healthcare environments, despite deriving from decontaminated sources, and despite pre-filtration at the point of entry in the local waterworks, water can be contaminated at the point of use, for instance due to patients contacting the water taps for washing or drinking, surgery activities, or water stagnation in the waterworks. Contaminants delivered at the point of use through these mechanisms, even at very low concentration, can then quickly proliferate to dangerous levels. This second problem is also felt in developed countries.

To overcome these problems, the adoption point-of-use (POU) purifiers has been proposed, namely, purifiers added as the final elements of the waterworks. The operating principle of POU purifiers may be adsorption (e.g. on activated carbon) or ultraviolet irradiation; common useful POU purifiers are based on membrane filtration processes, e.g., microfiltration, reverse osmosis, nanofiltration, and ultrafiltration.

Basic principles for the acceptance of a membrane separator for use as a purifier for drinking water are presented for instance in the document "Membrane Filtration Guidance Manual: Overview and Summary" (MFGM), published on-line by the US EPA. According to this manual, the efficiency in contaminants removal capability is measured by the so-called Log removal value, defined by the formula:

$$\mathrm{LRV} = \log(C_f) - \log(C_p)$$

where:

LRV = log removal value demonstrated during challenge testing;
$C_f$ = feed concentration measured during challenge testing;
$C_p$ = filtrate concentration measured during challenge testing.

The MFGM proposes *Cryptosporidium* as the test standard for measuring LRV.

The efficiency of membrane separators, in terms of liters of filtered water per unit time, depends on several factors, in particular the membrane surface and the pressure drop across the membrane; the efficiency in terms of LRV generally depends on the size of openings in the membrane. The two requirements, of having a sufficient flow of water downstream the purifier and of assuring the highest possible contaminants abatement, impose conflicting constructional measures on the purifier: high flow of water is favored by membranes with big-size pores, purification from contaminants calls for a pore size being as small as possible.

Reverse osmosis and nanofiltration generally require an electrical power source for their operation, thus representing a complication of the system and adding costs to its operation.

Ultrafiltration is generally seen in the field as the most suitable technique for POU water purification, and purifiers based on this filtration technique are already known in the state of the art.

Although purifying systems employing flat membranes are known, ultrafiltration POU purifiers generally comprise a bundle of hollow fibers, in which the surface of the fibers constitutes the filtering membrane; this construction is useful in that it affords a high membrane surface in the limited volume generally available for a POU purifier.

Several POU purifier systems based on ultrafiltration have been proposed.

Japanese published patent application JP 2006-088148 A discloses a POU purifier in which the hollow fibers, made of polysulfone (or a polysulfone-based polymer blend), have pores of different size on the inner and outer surface of the fiber; the inner surface of the hollow fiber presents macropores of size in the range 10-200 μm, while on the outer surface are present pores with size in the range 0.01-5 μm; the preferred direction of water flow is from the outer surface towards the inner hollow space of the fiber. This document describes the use of the membrane for filtering of water or other fluids (e.g., blood), but does not specifically mention the use for removal of bacteria or viruses; given the size of pores taught therein, the membranes of JP 2006-088148 A are not well suited for the removal of biological contaminants from water.

International patent application WO 2012/035402 A1 describes a hollow fiber membrane for producing drinking water. This document states that membranes made of homopolymers have drawbacks and concentrates on polysulfone-based copolymer membranes; it does not mention the size of pores nor the fact that these may have a size varying across the membrane thickness, and gives no indication of a preferred direction of flow across the membrane. WO 2012/035402 A1 reports a reduction of bacteria concentration in the log value range between 4 and 6, that may however be not enough to achieve the levels of purity required for a safe drinking water or for healthcare environments, especially when water upstream the purifier is highly contaminated.

It is the object of the present invention to provide a polymeric membrane capable of providing a sufficiently high flow rate of purified water and an abatement of biological contaminants improved with comparison to prior art membranes, as well as to provide a POU water purifier exploiting the superior features of said membranes.

## SUMMARY OF THE INVENTION

These objects are obtained according to the present invention, that in a first aspect thereof consists in a polysulfone membrane in the form of a bundle of hollow fibers having an inner diameter between 150 and 250 $\mu$m and a wall thickness between 30 and 50 $\mu$m, and pores with different size on the inner and outer surface of the hollow fiber; in particular, the membrane of the invention has pores on one surface with size in the range of about 0.25 to about 1.5 $\mu$m, and pores on the other surface having an elongated shape, with the longer axis of size below 100 nm and more than 80% of these latter pores with shorter axis of size below 12 nm.

In its second aspect, the invention provides a point-of-use water purifier comprising a bundle of hollow fiber membranes as described above.

## BRIEF DESCRIPTION OF THE FIGURES

The invention will be illustrated in detail below, with reference to the Figures, in which:

- Fig. 1 shows a microphotograph of a section of the hollow fiber of the invention;
- Fig. 2 shows a microphotograph of the section of the wall of the same fiber of Fig. 1, taken at a higher magnification;
- Fig. 3 shows a microphotograph of the outer surface of the hollow fiber of the invention;
- Fig. 4 shows a microphotograph of the inner surface of the hollow fiber of the invention;
- Fig. 5 schematically shows a point-of-use purifier of the invention, in a sectional view.

## DETAILED DESCRIPTION OF THE INVENTION

The hollow fibers of the invention have an inner diameter between 150 and 250 $\mu$m and a wall thickness between 30 and 50 $\mu$m, and thus an outer diameter ranging between 210 and 350 $\mu$m. These are preferred ranges referring to end use tap water purification. The skilled person can also determine alternative ranges if the intended use demands for certain limited ranges. Those limitations might be the needed filtration volume per time unit or the need to adapt to provided water pressures of respective end use facilities. Besides, the hollow fibers of the invention are characterized by an asymmetrical porosity in the inner and outer surface of the fiber, with the pores on one of the two surfaces of much bigger size compared to the size of pores on the opposite surface; for ease of description, in the remainder of the description the surface of the hollow fiber with pores of bigger size will be referred to as the "A" surface, while the surface with pores of lower size will be referred to as the "B" surface. Pores on the A surface have a nearly circular, elliptical or oval shape, with a size in the range of about 0.25 to about 1.5 $\mu$m and a ratio major axis/minor axis generally lower than 2; essentially the totality of these pores have an area higher than $5 \times 10^{-2}$ $\mu$m$^2$, with more than 90% of the porosity (intended as ratio between the geometrical area of the membrane and the open area of pores) on this face ascribable to pores having an area in the range between 0.1 and 3.2 $\mu$m$^2$. The pores on the B surface, on the other hand, have an elongated shape, with the major axis of size below 100 nm and the minor axis of size below 12 nm, and typically a ratio between the major axis and the minor axis between 2 and 15; besides, essentially the totality of these pores have an area lower than $1 \times 10^{-2}$ $\mu$m$^2$, and more than 95% of the porosity is ascribable to pores having an area lower than $3.2 \times 10^{-3}$ $\mu$m$^2$.

The hollow fibers of the invention may be produced in such a way that the A surface is either the outer surface of the fiber, or the inner surface of the fiber. The hollow fibers of the invention are made of polysulfone, which has proven the best material for water filtration application due to its mechanical and physicochemical stability properties.

The production of the fibers of the invention is carried out according to general methods known in the field, and in particular following the so-called "dry-wet spinning" method. Very briefly, in this method, a solution of a polymer or a blend of polymers having sufficient viscosity is prepared; the solution is fed to a spinning nozzle (also known as spinneret) of suitable shape for producing a continuous hollow fiber, in the inner bore of which a coagulant liquid for the polymer(s) is also fed; the thus formed fiber is collected into a tank containing a non-solvent for the polymer(s), where the latter solidifies. For more information about the basics of the technique, reference can be made, e.g., to the book "Basic principles of membrane technology", Marcel Mulder, Kluwer academic publishers, (1996), and in particular to Chapter III, section 4.2., dedicated to the production of tubular membranes; or to patent application JP 2006-088148 A.

For the objects of the present invention, the dry-wet spinning method is implemented with the following parameters (all percentages are by weight unless specified otherwise):

- composition of the starting solution: 16% polysulfone, 4% polyvinylpyrrolidone, 80% of a solvent that can be dimethylacetamide alone or in mixture with a further solvent or non-solvent;
- coagulant liquid: 44% water - 56% dimethylacetamide;
- temperature spinning nozzle: 40 °C;
- non-solvent, precipitating composition in the precipitating bath, preferred: water kept at 65 °C;
- spinning speed: 400 mm/min.

The resulting hollow fibers have a size that mostly depends on the spinneret. The hollow fibers in use for tap water end use purification according to the invention have an inner diameter between 150 and 250 $\mu$m, preferably between about 200 and 220 $\mu$m, and a thickness of the wall, constituting the filtration membrane, between 30 and 50 $\mu$m and preferably between about 35 and 40 $\mu$m; the inventors have observed that with lower thickness the mechanical resistance to pressure exerted by inlet water (either continuous pressure or pressure bursts) becomes poor and also the efficiency of contaminants retention degrades. Micro cracks and even larger cracks may occur even caused from pressure pulses that are usual in normal tab water installations. Higher wall thickness values on the other hand lead to a reduced number of fibers that can be accommodated in a unit volume (packing density), and as a consequence to a reduced filtration rate. Values of inner diameter and wall thickness in the indicated ranges give rise to fibers showing a mechanical resistance suitable for the intended application, and affords a packing density that assures a purified water flow rate of at least 2 l/min/m$^2$ (liters per minute per square meter of membrane) when the inlet water pressure is of 1 bar.

The membrane reveals an asymmetrical structure. Across its wall thickness, the pore size may increase in the direction from the inner surface to the outer surface, or from the outer surface to the inner surface. Pore shape and size are non-homogenous across the volume of the membrane, but in general the pores contribute to the above mentioned asymmetry of the membrane. It is understood that asymmetry refers here to a change of pore sizes according to the asymmetric coagulation kinetics that are used during the spinning process. In view of a direction from the inside surface to the outside surface pore sizes continuously increase throughout the wall.

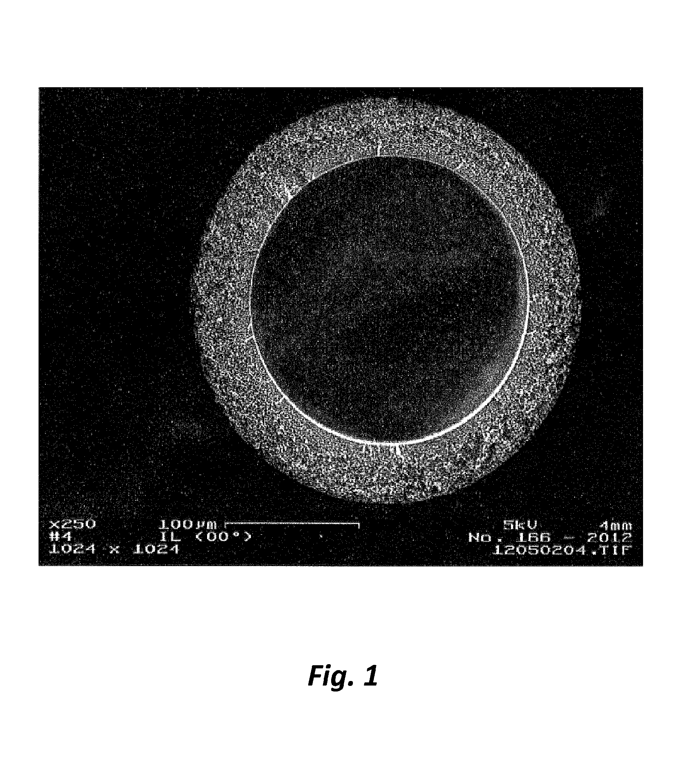

Figures 1 to 4 are reproductions of SEM microphotographs, taken at different magnifications, of details of hollow fibers of the invention.

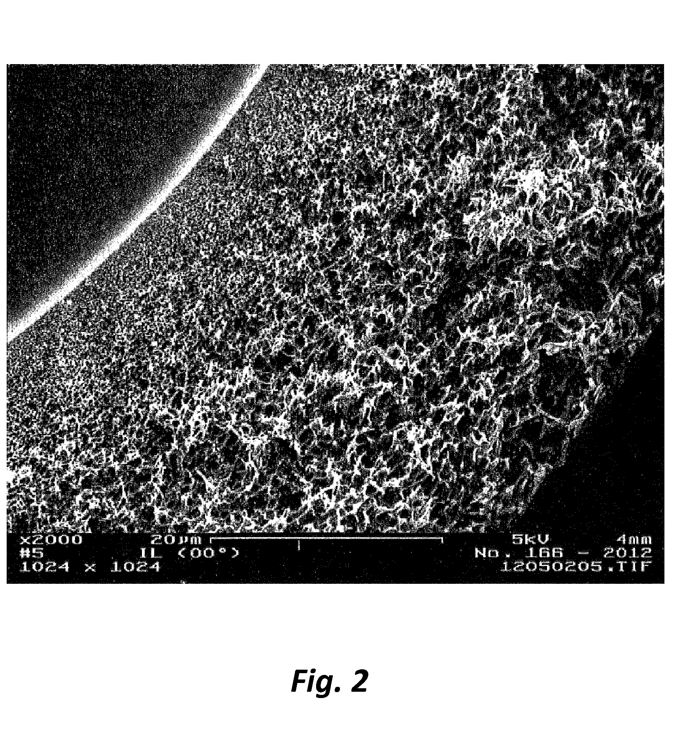

Figures 1 and 2 show microphotographs of a hollow fiber in a sectional view, from which are visible the characteristic sizes of the fiber, as well as the varying size of pores moving from the inner side to the outer side of the fiber.

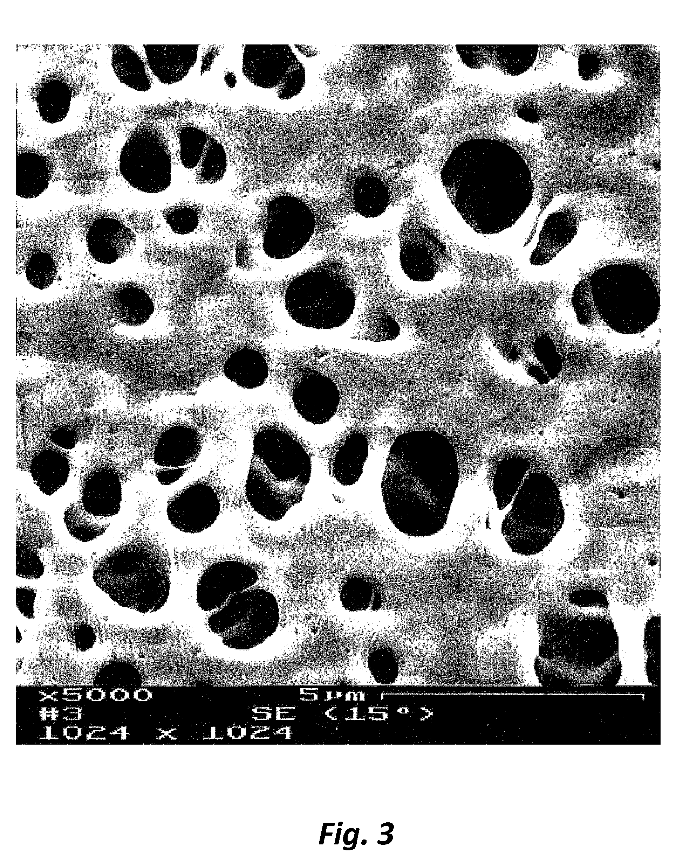

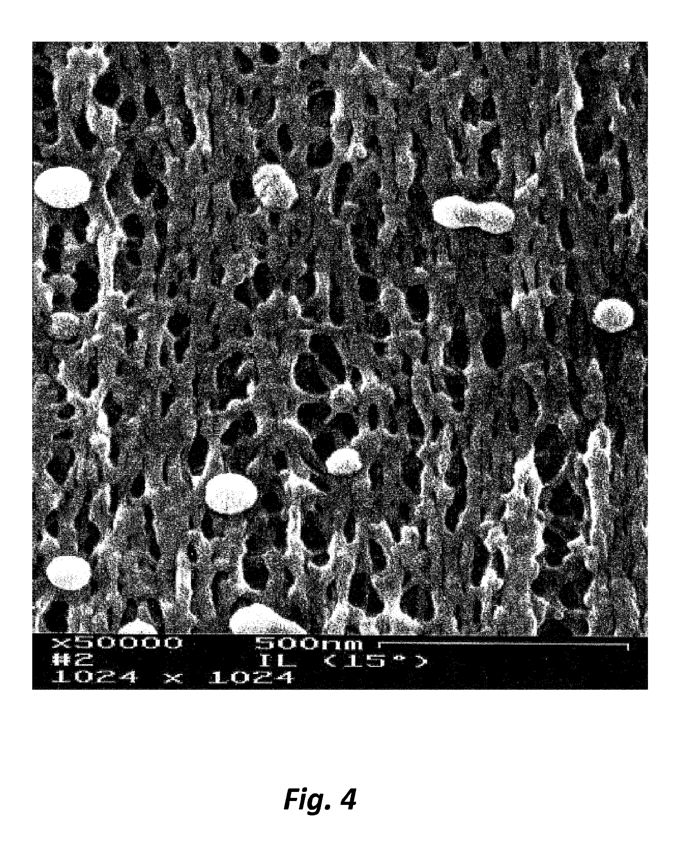

Figures 3 and 4 show, respectively, details of the outer and inner surface of the hollow fiber of the invention; from these pictures it is possible to appreciate the different size and shape of pores on the two sides of the fiber. While these figures illustrate the case of a membrane with bigger pores on the outer surface, the hollow fibers of the invention may also have the opposite construction, namely, with the bigger pores on the inner surface of the fiber.

In its second aspect, the invention further provides a POU water purifier comprising as the filtering membrane a bundle of the hollow fiber as described above.

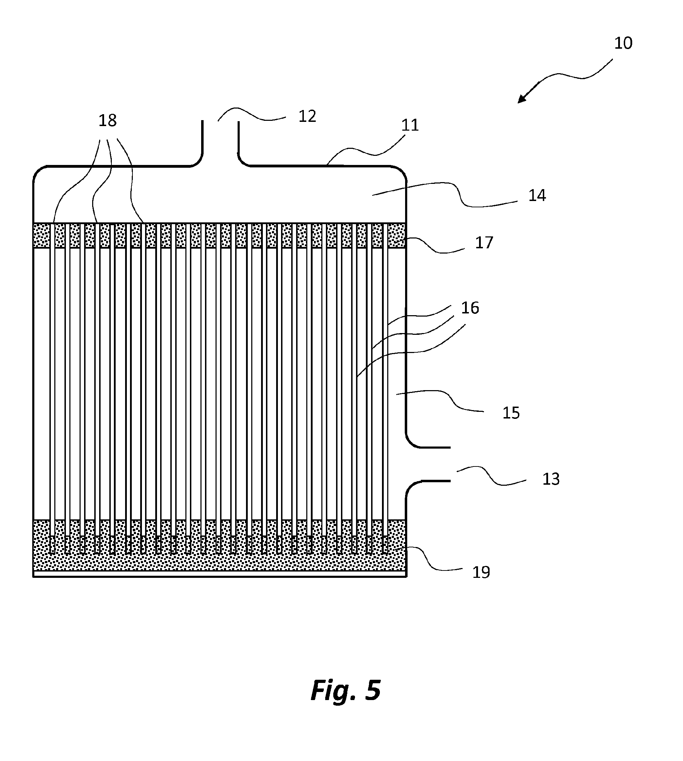

The purifier is described below with reference to Figure 5. The following description is made with reference to the case that filtration takes place in the direction from the inner side to the outer surface of the hollow fibers (I/O), but it will be apparent to the skilled reader that the opposite filtration direction (O/I) can be adopted as well.

For use in the purifier, the hollow fibers previously described are arranged into a bundle with any suitable method known to the skilled person in the field; the production of the bundle is preferably completely automated, for instance according to the teachings of patent US 8,327,901 B2.

The bundle is then cut at the desired length, and subjected to sealing at its ends with a suitable polymeric material (process known as "potting") and subsequent reopening of one end thereof. This procedure, well-known in the technical field, is described shortly herein. The bundle is inserted into a potting chamber having essentially the same shape (typically cylindrical) and size of the final sealed bundle; a hardenable sealing material in liquid form is then fed at the two ends of the chamber from openings suitably provided in the end caps of the chamber.

It is also possible to produce a filtration unit with a hollow fiber bundle that are opened at both ends accordingly. The filtration process differs from the aforementioned method in that that a cross flow filtration mode will then be achieved. But those filtration processes are well known to the skilled person.

This step is carried out under conditions such that the liquid material penetrates into the fibers, at the two free ends thereof, a distance x that is lower than the height y of the sealing liquid level between the fibers; this condition can be obtained, for instance, by applying a pressure (e.g., by using compressed air) externally to the fibers, so that these result slightly "squeezed" to a reduced internal cross-section; localization of the sealing liquid at the opposite ends of the bundle during this step is generally favored by rotating the potting chamber along an axis perpendicular to the axis thereof. Upon solidification (setting) of the sealing material, the thus produced solid sealing is cut at one of the ends only of the bundle, along a plane perpendicular to the axis of the bundle and at a position between distances x and y; this way, the sealing material penetrated into the fibers is completely removed and the hollow thereof is re-opened, while part of the sealing material originally present between the fibers is retained, forming a complete and liquid-tight cap among these. The solid sealing material cap at the opposite end of the bundle is maintained instead, so that the fibers are tightly closed at this end. For more details about this production method, reference can be made e.g. to patents US 4,689,191 or US 8,215,261 B2.

Making now reference to Fig. 5, to produce a purifier of the invention, 10, the bundle thus obtained is then inserted into a housing 11. The housing may be made of metal, for instance stainless steel; preferably, the housing is made of polymers, such as polypropylene (PP) or polycarbonate (PC), polystyrene (PS) or ABS (Acrylonitrile-Butadiene-Styrene thermoplastic terpolymer).

The housing 11 has two openings, 12 and 13, generally provided with fittings (not shown in Fig. 5) for connection of the purifier, respectively, to the waterworks and to a water delivery element, such as a tap; opening 12 thus represents a port suitable for the ingress of untreated water, which might be assigned in preferred embodiment as inlet port. The opening 13 represents a port for the egress of treated water, which might be assigned in preferred embodiments as an outlet port. The inner space of housing 11 is divided into an inlet compartment 14 and an outlet compartment 15 by the bundle of hollow fibers of the invention, cumulatively indicated by numeral 16; the diameter of the fibers and their mutual distance are highly exaggerated in Fig. 5, for clarity of representation. Elements 17 and 19 in Fig. 5 represent, respectively, the solid sealing material at the open and at the closed ends of the fibers; element 17 forms an impermeable plate from which the fibers of the bundle hang down, with the open ends (cumulatively indicated by numeral 18) of the fibers facing the inlet compartment 14. The plate is sealingly connected, e.g. by gluing, to the inner wall of the housing 11. With this construction, impure water entering from opening 12 can only pass in the inlet compartment 14, and from there to outlet opening 13, by permeation through the porous walls of the fibers of the bundle; given the micro-structure of the hollow fibers, the water to be treated crosses the membrane from the inside towards the outside (I/O) of the hollow fiber.

The geometry and size of the purifier may vary, depending on the use it is intended for; for instance, in case of a purifier for drinking water, it may have a length/diameter ratio close to 1 (similar to the case represented in Fig. 5), while in a purifier intended for fitting in a shower head said ratio may approach a value of 10; irrespective of the aspect ratio of the purifier, the inventors have determined that with the fibers previously described, it is possible to reach a packing density such that a filtering surface of around 1 $m^2$ is obtained in a purifier having an inner volume of around 150-200 $cm^3$.

With this filtering surface, it is possible to guarantee a minimum filtration rate of at least 2-3 liters/min when the inlet water pressure is of 1 bar, which can be increased to 10 or 12 liters/min when said inlet pressure raises to 4 or 10 bar, respectively (for instance, by the aid of pumps, or hydrostatic pressure of water coming from the waterworks).

The purifier of the invention can deliver about from 4000 l/day but at least has a durability of 8000 l per 60 days of a permanent use, i.e. without change of the hollow fiber cartridge throughout 60 days, to deliver water, meeting international standards for water to be considered potable.

The purifier can also comprise additional elements, such as a non-return valve, a venting valve, or a filter change indicator, as known to the experts in the field.

The invention will be further illustrated by means of the following examples.

In the examples, the performance of filters is tested referring to the regulatory framework of US EPA, in particular to MFGM (Membrane Filtration Guidance

Manual), which sets the rules to grant a filter the "proof/credit" of virus decontamination in water. The tests proof the filter performance in their virus decontamination function, required by the health safety standards and recommendations on an international basis.

In the Tables presenting the results of the examples, a numerical value "x" corresponds to a decontamination performance of log x, as indicated in the section "DISCUSSION OF RELATED ART" of the present description.

EXAMPLE 1

It is produced a purifier of geometry similar to the one represented in Fig. 5, comprising polysulfone hollow fibers. The porosity of the inner and outer surfaces of the fibers is evaluated by taking SEM pictures of said surfaces, and analyzing the pictures by means of the automated image processing software imageJ 1.48h3, setting a threshold values filter in an 8 bit black-and-white plot. The thresholds were set according to the best knowledge to obtain the best assimilation between original picture and threshold set picture. This evaluation gives, as a result, a porosity of 19.3% (ratio between pore area and overall area) on the inner surface of the membrane, and a porosity of 30% on the outer surface. The overall filtering area of the fibers in the purifier is 1.8 m$^2$.

EXAMPLE 2

The purifier of Example 1 is tested for viruses removal capacity.

The viruses chosen for the test are Herpes Simplex Virus-1 (HSV-1) and Echovirus-7 (Echo-7); these two species have different size, HSV-1 having a diameter over 100 nm, while Echo-7 has size in the range 20-25 nm, thus allowing an evaluation of membrane performance over a wide range of contaminants size. Standard solutions of the two viruses are prepared, by suspending a suitable amount of the virus in phosphate buffered saline (PBS), to make sure that results are not affected by possible natural instability of the virus in pure water.

A high-titre stock (concentration > 10$^4$/ml) is prepared for each of the two selected viruses, and used for infecting several flasks of VERO cells; the supernatant is collected when the cytopathic effect is at its maximum, and the viral titre of the stock is measured by the end-point titration method on VERO cells. Briefly, this method consists in preparing a 96-well tissue culture plate of VERO cells; the samples to be titrated are diluted with a dilution ratio from 1:5 to 1 :10$^7$ (1:5, 1:10, 1: 100, ...), then each diluted suspension is seeded on a well of VERO cells. After 3 days incubation at 37 °C, the virus titre is read as the highest dilution showing the typical viral cytopathic affect; the results, expressed as TCID$_{50}$/ml, are calculated using the known Reed-Muench formula, repeating each titration in duplicate.

A sufficient volume of the so prepared high-titre stock solutions is used to test the LRV of the membrane, by feeding it to the POU purifier at a constant flow rate by means of a peristaltic pump; before starting the test with the actual samples, the membrane is completely wetted by passing water through the purifier. The tests are carried out at flow rates of 1.5 and 4 l/min.

The LRV results of the tests are reported in Table 1 below.

**Table 1**

| Virus | Flow rate (l/min) | |
|---|---|---|
| | 1.5 | 4 |
| HSV-1 | 4.60 ± 0.58 | 4.59 ± 0.59 |
| Echo-7 | 4.70 ± 0.71 | 4.46 ± 0.39 |

As can be seen form the results in the table, the tested purifier of the invention affords a viruses removal performance surely higher than log 4 (and likely approaching, or higher than, log 5), even with the smallest virus tried.

EXAMPLE 3

A purifier comprising polysulfone hollow fibers produced as described in Example 1 is tested for bacteria and endotoxins removal capacity.

Solutions are prepared containing the following microbiological strains in pure water:

- *Legionella Pneumoniae* (atcc 33152)
- *Pseudomonas Aeruginosa* (atcc 9027)
- *Escherichia Coli* (atcc 8739).

The microbiological strains were obtained from Microbiologics Inc., 200 Cooper Av. North, St. Cloud, Minnesota, USA 56303, and re-hydrated, following the manufacturer's directions: it is used a potassium dihydrogen phosphate-di-sodium hydrogen phosphate buffer, having pH 7 ± 0.02 at 20 °C, the re-hydrated strain is brought to 37 °C, and incubated 24 hours to increase the bacteria load to at least 10$^9$ CFU/ml. After 24 hours, an aliquot of each solution is taken and, after convenient dilutions, stained on the specific selective medium. The stock solution is then stored in a refrigerator for another 24 hours, at the end of which the count of viable CFU per ml of stock solution is carried out.

The solutions used for the filtering tests are then prepared (in amounts of 5 liters each) by mixing a desired volume of stock solution with sterile and pyrogen-free water.

After a pre-test phase, in which sterile water is passed across the purifier for 1 min, the thus prepared test solutions are then fed to the purifier with a peristaltic pump at a flow rate of 0.5 l/min, with a feeding pressure of 0.6-0.7 bar; the filtrate is collected on a nitrocellulose membrane, then plated on its selective culture terrain and incubated for a preset time depending on the bacterium, in order to measure the amount of bacteria that crossed the membrane. Each measure is repeated three times, and the results averaged.

The LRV results of the tests are reported in Table 2 below.

**Table 2**

| Bacterium | CFU/ml before filtration | CFU/ml after filtration |
|-----------|--------------------------|-------------------------|
| *P. Aeruginosa* | $1.2 \times 10^9$ | 0 |
| *L. Pneumoniae* | $2.1 \times 10^9$ | 0 |
| *E. Coli* | $2.4 \times 10^9$ | 0 |

By following the same test protocol, the capability of the purifier of the invention of removing an endotoxin (C. Code 0005, Lot No. 122/2012, 5000 EIU/vial) is measured. Test solutions are prepared at 1000 EU/l, always obtaining in three tests a concentration in the filtrate lower than 0.125 EU/ml; the unit EU/l (Endotoxin Units per Liter) is a standard unit for endotoxin concentrations (1 EU corresponds to 100 pg of endotoxin, as can be deduced from several pharmacopoeias).

## Claims

1. A membrane made of polysulfone in the form of a hollow fiber, **characterized by** an inner diameter between 150 and 250 $\mu$m and a wall thickness between 30 and 50 $\mu$m, and by having pores of different size and shape on the inner and outer surface of the fiber.

2. A membrane according to claim 1, wherein:

   - the pores on one of said inner or outer surface have a nearly circular, elliptical or oval shape, with a size in the range of about 0.25 to about 1.5 $\mu$m, a ratio major axis/minor axis lower than 2, essentially the totality of these pores having an area higher than $5 \times 10^{-2}$ $\mu$m$^2$; and
   - the pores on the opposite surface have an elongated shape, with the major axis of size below 100 nm and the minor axis of size below 12 nm, a ratio between the major axis and the minor axis between 2 and 15, essentially the totality of these pores having an area lower than $1 \times 10^{-2}$ $\mu$m$^2$.

3. A membrane according to claim 2, in which more than 90% of the cumulative area of the pores with a nearly circular, elliptical or oval shape is ascribable to pores having an area in the range between 0.1 and 3.2 $\mu$m$^2$, and more than 95% of the cumulative area of the pores with elongated shape is ascribable to pores having an area lower than $3.2 \times 10^{-3}$ $\mu$m$^2$.

4. A point-of-use water purifier (10), comprising a housing (11) having a first opening (12) for connection of the purifier to the waterworks and a second opening (13) being the outlet of purified water, the space inside said housing being divided by a bundle (16) of hollow fibers of any one of claims 1 to 3 into an inlet compartment (14) in fluid communication with said first opening and an outlet compartment (15) in fluid communication with said second opening, said fibers having an open end (18) facing said inlet compartment and the opposite end sealingly closed.

5. A method of operating a point-of-use water purifier of claim 4, consisting in feeding water to be purified into said inlet compartment of the purifier at a pressure between 1 bar and 10 bar, and withdrawing from said second opening water purified from biological contaminants at a flow rate between 2 and 12 liters/min per 1 m$^2$ of surface of membrane inside the purifier.

**Fig. 1**

*Fig. 2*

*Fig. 3*

*Fig. 4*

*Fig. 5*

Europäisches
Patentamt

European
Patent Office

Office européen
des brevets

# EUROPEAN SEARCH REPORT

Application Number

EP 14 18 5809

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 842 694 A1 (KANEKA CORP [JP]) 20 May 1998 (1998-05-20) * page 4, line 1 - line 18; examples * * page 5, line 18 - line 25 * ----- | 1-3 | INV. B01D63/02 B01D69/02 B01D69/08 C02F1/44 |
| X | EP 0 568 045 A1 (KURARAY CO [JP]) 3 November 1993 (1993-11-03) * page 10, line 37 - line 51 * ----- | 1-3 | |
| X | GB 2 135 902 A (KURARAY CO) 12 September 1984 (1984-09-12) * page 4, line 5 - line 8; figures * * page 5, line 2 - line 61 * ----- | 1-5 | |
| A | DE 196 33 177 A1 (MANN & HUMMEL FILTER [DE]) 19 February 1998 (1998-02-19) * figures 4-6 * ----- | 1,4 | |
| A | DE 10 2006 002013 B3 (SARTORIUS BIOTECH GMBH [DE]) 6 September 2007 (2007-09-06) * paragraphs [0008], [0010]; figures * ----- | 1,4 | |
| | | | TECHNICAL FIELDS SEARCHED (IPC) |
| A | EP 2 052 771 A1 (KURARAY CO [JP]) 29 April 2009 (2009-04-29) * paragraphs [0021], [0022]; figures * ----- | 1-3 | B01D C02F |

The present search report has been drawn up for all claims

| Place of search | Date of completion of the search | Examiner |
|---|---|---|
| Munich | 27 February 2015 | Goers, Bernd |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EP 2 998 014 A1

### ANNEX TO THE EUROPEAN SEARCH REPORT
### ON EUROPEAN PATENT APPLICATION NO.

EP 14 18 5809

27-02-2015

| Patent document cited in search report | | | Publication date | Patent family member(s) | | | Publication date |
|---|---|---|---|---|---|---|---|
| EP | 0842694 | A1 | 20-05-1998 | CA | 2221722 | A1 | 25-09-1997 |
| | | | | EP | 0842694 | A1 | 20-05-1998 |
| | | | | US | 6042783 | A | 28-03-2000 |
| | | | | WO | 9734687 | A1 | 25-09-1997 |
| EP | 0568045 | A1 | 03-11-1993 | CA | 2094749 | A1 | 30-10-1993 |
| | | | | CN | 1087841 | A | 15-06-1994 |
| | | | | DE | 69305567 | D1 | 28-11-1996 |
| | | | | DE | 69305567 | T2 | 17-04-1997 |
| | | | | EP | 0568045 | A1 | 03-11-1993 |
| | | | | ES | 2093310 | T3 | 16-12-1996 |
| | | | | GR | 3021445 | T3 | 31-01-1997 |
| | | | | RU | 2113273 | C1 | 20-06-1998 |
| | | | | TW | 272212 | B | 11-03-1996 |
| | | | | US | 5340480 | A | 23-08-1994 |
| GB | 2135902 | A | 12-09-1984 | CA | 1221645 | A1 | 12-05-1987 |
| | | | | GB | 2135902 | A | 12-09-1984 |
| | | | | US | 4547289 | A | 15-10-1985 |
| DE | 19633177 | A1 | 19-02-1998 | DE | 19633177 | A1 | 19-02-1998 |
| | | | | EP | 0824957 | A1 | 25-02-1998 |
| DE | 102006002013 | B3 | 06-09-2007 | NONE | | | |
| EP | 2052771 | A1 | 29-04-2009 | BR | PI0716028 | A2 | 06-08-2013 |
| | | | | CN | 101500696 | A | 05-08-2009 |
| | | | | EP | 2052771 | A1 | 29-04-2009 |
| | | | | KR | 20090037963 | A | 16-04-2009 |
| | | | | TW | 200815096 | A | 01-04-2008 |
| | | | | US | 2009148659 | A1 | 11-06-2009 |
| | | | | WO | 2008018181 | A1 | 14-02-2008 |

**EP 2 998 014 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2006088148 A
- WO 2012035402 A1
- US 8327901 B2
- US 4689191 A
- US 8215261 B2

### Non-patent literature cited in the description

- Membrane Filtration Guidance Manual: Overview and Summary. US EPA
- **MARCEL MULDER.** Basic principles of membrane technology. Kluwer academic publishers, 1996